# NEUE EUROPÄISCHE PATENTSCHRIFT

(11) **EP 0 703 255 B2**
(45) Veröffentlichungstag und Bekanntmachung des Hinweises auf die Entscheidung über den Einspruch: **26.07.2006**
(45) Hinweis auf die Patenterteilung: 09.12.1998
(21) Anmeldenummer: 95114452.6
(22) Anmeldetag: 14.09.1995
(51) Int. Cl.: C08G 18/70, C09J 175/00, C09D 175/00

(54) **Wasseremulgierbare Polyisocyanate**
Water-emulsifiable polyisocyanates
Polyisocyanates émulsifiables dans l'eau

(30) Priorität: 23.09.1994 DE 4433929
(43) Veröffentlichungstag der Anmeldung: 27.03.1996
(73) Patentinhaber: BASF Aktiengesellschaft, 67056 Ludwigshafen (DE)
(72) Erfinder: Häberle, Karl, Dr., D-67346 Speyer (DE)

(56) Entgegenhaltungen:
- EP-A- 0 019 860
- EP-A- 0 061 628
- EP-A- 0 206 059
- EP-A- 0 469 389
- EP-A- 0 557 844

## Beschreibung

Die Erfindung betrifft wasseremulgierbare Polyisocyanate, enthaltend .
a) aliphatische, cycloaliphatische und aromatische Polyisocyanate und
b) Umsetzungsprodukte der vorstehend aufgeführten Polyisocyanate mit 2-Hydroxyethansulfonsäure oder 2-Hydroxypropansulfonsäure,
wobei der Gehalt der schwefelsauren Gruppe 0,02 bis 3 mol pro kg wasseremulgierbarer Polyisocyanate beträgt und die schwefelsaure Gruppe als Salz mit tertiären Aminen vorliegt.

Im weiteren betrifft die Erfindung die Verwendung der wasseremulgierbaren Polyisocyanate als Zusatzmittel für wäßrige Dispersionen, insbesondere für Klebstoffe, Beschichtungsmittel oder Imprägnierungsmittel.

Gebrauchseigenschaften von wäßrigen Polymerdispersionen können durch den Zusatz von Polyisocyanaten verbessert werden.

Zu diesem Zweck haben sich hydrophil modifizierte Polyisocyanate, welche wasseremulgierbar sind, als geeignet erwiesen. Bekannt sind z.B. aus der EP-A-206 059 Polyisocyanate, welche mit Polyethylenoxid-haltigen Alkoholen hydrophil modifiziert sind. Ein grundsätzlicher Nachteil dieser polyisocyanate besteht darin, daß durch den relativ hohen Gehalt an Polyethylenoxid z.B. dem Klebstoff oder der Beschichtung eine unerwünschte permanente Hydrophilie verliehen wird.

Dieser Nachteil wird vermieden durch die Verwendung von Polyisocyanaten, die durch chemisch gebundene Carboxylgruppen hydrophil modifiziert sind, wie sie z.B. in der DE-A-41 42 275 beschrieben sind. Hierbei ist jedoch nachteilig, daß die carboxylhaltigen Polyisocyanate mit Bindemitteln mit pH-Werten kleiner als ca. 5 nicht verträglich sind. Es ist daher nötig, solche Bindemittel, wie sie z.B. bei der durch Persulfat initiierten Emulsionspolymerisation olefinisch ungesättigter Monomere erhalten werden und die üblicherweise sauer reagieren, durch Zugabe von Basen auf pH-Werte größer als 5, besser noch höher, einzustellen. Dies hat neben dem zusätzlichen Verfahrensaufwand zur Folge, daß die Topfzeit, d.h. die zeit nach Zugabe des Polyisocyanats, in der die Mischung noch verarbeitbar ist, reduziert wird.

Weiterhin weisen die carboxylhaltigen Polyisocyanate häufig nur dann eine ausreichende Lagerstabilität auf, wenn sie im nichtneutralisierten Zustand aufbewahrt werden, weil die mit tertiären Aminen neutralisierten Carbonsäuren wirksame Katalysatoren für die Trimerisierung von NCO-Gruppen darstellen. Der Anwender ist daher gezwungen, die Neutralisation unmittelbar vor der Emulgierung durchzuführen, was einen weiteren Verfahrensschritt darstellt.

Aufgabe der Erfindung war daher, ein wasseremulgierbares Polyisocyanat zur Verfügung zu stellen, das folgende Anforderungen erfüllt:
- leichtes Einarbeiten in wäßrige Imprägnierungs-, Beschichtungsmittel und Klebstoffe,
- keine wesentliche Erhöhung der Hydrophilie der Imprägnierungs-, Beschichtungsmittel oder Klebstoffe,
- Verträglichkeit mit Imprägnierungs-, Beschichtungsmitteln oder Klebstoffen bei pH-Werten kleiner 5,
- verbesserte Lagerfähigkeit.

Demgemäß wurde das oben definierte wasseremulgierbare Polyisocyanat und seine Verwendung als Zusatzmittel für wäßrige Dispersionen gefunden.

Die erfindungsgemäßen, wasseremulgierbaren Polyisocyanate enthalten
a) die oben aufgeführten Polyisocyanate und
b) Umsetzungsprodukte der Polyisocyanate a) mit 2-Hydroxyethansulfonsäure oder 2-Hydroxypropansulfonsäure,
wobei der Gehalt der schwefelsauren Gruppe 0,02 bis 3 mol pro kg wasseremulgierbarer Polyisocyanate beträgt und die schwefelsaure Gruppe als Salz mit tertiären Aminen vorliegt..

In den wasseremulgierbaren Polyisocyanaten können die unter b) verwendeten Polyisocyanate a) mit denen unter a) gleich oder verschieden sein.

Als Polyisocyanat genannt seien z.B. übliche Diisocyanate und/oder übliche höher funktionelle Polyisocyanate mit einer mittleren NCO-Funktionalität von 2,0 bis 4,5. Diese Komponenten können alleine oder im Gemisch vorliegen.

Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodezamathylencliisocyanat, Tetradeeamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan(Isophorondiisocyanat) oder 2,4-, oder 2,6-Diisocyanato-1-methylcyclohexan sowie aromatische Diisocyanate wie 2,4- oder 2,6-Toluylendiisocyanat, Tetramethylxylylendiisocyanat, p-Xylylendiisocyanat, 2,4'- oder 4,4'-Diisocyanatodiphenylmethan, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen. Bevorzugt sind Hexamethylendiisocyanat und Isophorondiisocyanat.

Als übliche höher funktionelle Polyisocyanate eignen sich beispielsweise Triisocyanate wie 2,4,6-Triisocyanatotoluol oder 2,4,4'-Triisocyanatodiphenylether oder die Gemische aus Di-, Tri- und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Von besonderem Interesse sind übliche aliphatische höher funktionelle Polyisocyanate der folgenden Gruppen:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Tris-isvcyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%. insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.
(c) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 10 bis 30 Gew.-%, insbesondere von 18 bis 25 Gew.-% und eine mittlere NCO-Funktionalität von 3 bis 4,5 auf.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
(e) Oxadiazintriongruppen enthaltende Polyisocyante, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
(f) Uretonimin-modifizierte Polyisocyanate.

Aliphatische und cycloaliphatische Polyisocyanate sind besonders bevorzugt. Ganz besonders bevorzugt sind Hexamethylendiisocyanat und Isophorondiisocyanat und insbesondere deren Isocyanurate und Biurete.

Zur Herstellung der Umsetzungsprodukte b) werden die oben bezeichneten Polyisocyanate umgesetzt mit 2-Hydroxyethansulfonsäure oder 2-Hydroxypropansulfonsäure

Zur Herstellung der erfindungsgemäßen wasserdispergierbaren Polyisocyanate werden die oben beschriebenen Polyisocyanate umgesetzt mit 2-Hydroxyethansulfonsäure oder 2-Hydroxypropansulfonsäure.

Hierbei kann die Herstellung so erfolgen, daß die NCO-Gruppen des Ausgangs-Polyisocyanats und die NCO-reaktiven Gruppen der 2-Hydroxyethansulfonsäure oder 2-Hydroxypropansulfonsäure in äquivalenten Mengen umgesetzt werden und das so erhaltene, im wesentlichen NCO-Gruppen-freie Produkt mit dem selben oder auch verschiedenen Polyisocyanaten a) abgemischt wird.

Die Herstellung kann auch so erfolgen, daß die 2-Hydroxyethansulfonsäure oder 2-Hydroxypropansulfonsäure mit überschüssigem Ausgangs-Polyisocyanat umgesetzt werden.

2-Hydroxyethansulfonsäure oder 2-Hydroxypropansulfonsäure können entweder in ihrer Säure- oder ihrer Salzform eingesetzt werden. Die Alkalisalze der niedermolekularen schwefelsaure Gruppen-haltigen Verbindungen sind i.A. nicht im Reaktionsmedium löslich. In diesem Falle ist es vorteilhaft, nach allgemein bekannten Methoden die freien Säuren darzustellen und sie entweder als solche oder in Form ihrer Salze mit tertiären Aminen einzusetzen. Für den Fall, daß die freie Säure verwendet wurde, kann die Neutralisierung später entweder durch Zugabe wasserfreier Basen wie z.B. tertiären Aminen zum wasseremulgierbaren Polyisocyanat oder durch Emulgierung des wasseremulgierbaren Polyisocyanats in basenhaltigem Wasser erfolgen. 2-Hydroxyethansulfonsäure oder 3-Hydroxypropansulfonsäure werden in solchen Mengen verwendet, daß das wasseremulgierte Polyisocyanat einen Gehalt an chemisch fixierten schwefelsauren Gruppen von 0,02 mol/kg bis zu 3 mol/kg wasseremulgiertes Polyisocyanat enthält. Werden andere hydrophile Gruppen mitverwendet, so sollen nicht mehr als 2 mol Carboxylgruppen/kg wasseremulgierbares Polyisocyanat bzw. 15 Gew.-% Ethylenoxid-Einheiten, bezogen auf wasseremulgierbares Polyisocyanat, verwendet werden. Die Mitverwendung anderer hydrophiler Gruppen ist jedoch im allgemeinen nicht erforderlich.

Es kann vorteilhaft sein, bei der Synthese gegenüber NCO inerte Lösungsmittel wie Kohleilwasserstoffe, Ketone, Ester, Amide oder geeignete Lactame zu verwenden.

Die Umsetzung erfolgt vorzugsweise bei Temperaturen zwischen 20°C und 150°C; gegebenenfalls unter Mitverwendung üblicher Katalysatoren wie z.B. Dibutylzinndilaurat oder Diazabicyclooctan.

Die erfindungsgemäßen wasseremulgierbaren Polyisocyanate sind auch im neutralisierten Zustand lagerstabil, so daß eine Neutralisierung bereits beim Hersteller durchgeführt werden kann. Sie sind einfach und mühelos in wäßrige Bindemittel, insbesondere Dispersionen, bei beliebigen pH-Werten, auch bei pH-Werten unter 5, einzuarbeiten. Bei der Einarbeitung tritt kaum Schaumbildung auf.

Die wasseremulgierbaren Polyisocyanate eignen sich als Zusatzmittel, d.h. als Vernetzungsmittel, für wäßrige Polymerdispersionen, insbesondere für Dispersionen von Polyurethanen oder radikalisch polymerisierten Polymeren. Sie eignen sich besonders als Zusatzmittel für Klebstoffe, Beschichtungsmittel oder Imprägnierungsmittel auf Basis wäßriger Dispersionen insbesondere von Polyurethanen oder radikalisch polymerisierten Polymeren.

Sie können auch alleine, z.B. zur Ausrüstung von Textilien verwendet werden (s. z.B. Deutsche Patentanmeldung P 44 15 451.8).

Die erhaltenen Imprägnierungs-, Beschichtungsmittel und Klebstoffe weisen eine nur unwesentlich erhöhte Hydrophilie auf.

### Beispiele

### Polyisocyanat PI 1:

Durch Trimerisierung eines Teiles der Isocyanatgruppen von 1,6-Diisocyanatohexan hergestelltes Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 22,2 %, einem Gehalt an monomerem Diisocyanat von weniger als 0,3 %, einer Viskosität bei 23°C von 1,9 Pas und einer mittleren NCO-Funktionalität von ca. 3,3.

### Polyisocyanat PI 2:

Biuretpolyisocyanat auf Basis von 1,6-Diisocyanatohexan, welches im wesentlichen aus N,N',N''-Tris(6-isocyanatohexyl)biuret und dessen höheren Homologen besteht, mit einem NCO-Gehalt von 21,9 %, einem Gehalt an monomerem Diisocyanat von weniger als 0,3 %, einer Viskosität bei 23°C von 2,1 Pas und einer mittleren NCO-Funktionalität von ca. 3,3.

### Wasseremulgierbare Polyisocyanate

### Beispiel 1

Zu 300 g PI 1 wird ein Gemisch aus 6,3 g (50 mmol) 2-Hydroxyethansulfonsäure und 5,05 g (50 mmol) Triethylamin gegeben und 60 min bei 60°C gerührt.

Man erhält ein gelbliches, klares Harz mit einem NCO-Gehalt von 21,0 Gew.-% und einem Gehalt an schwefelsauren Gruppen von 161 mmol/kg. 1 g des Harzes wird durch Schütteln in 10 g Wasser zu einer feinteiligen Emulsion emulgiert.

### Beispiel 2

Man verfährt analog zu Beispiel 1 unter Verwendung von PI 2.

Man erhält ein gelbliches, klares Harz mit einem NCO-Gehalt von 21,8 Gew.-% und einem Gehalt an schwefelsauren Gruppen von 161 mmol/kg. 1 g des Harzes wird durch Schütteln in 10 g Wasser zu einer feinteiligen Emulsion emulgiert.

## Patentansprüche

1. Wasseremulgierbare Polyisocyanate, enthaltend
a) aliphatische, cycloaliphatische und aromatische Polyisocyanate und
b) Umsetzungsprodukte der vorstehend aufgeführten Polyisocyanate mit 2-Hydroxyethansulfonsäure oder 2-Hydroxypropansulfonsäure
wobei der Gehalt der schwefelsauren Gruppe 0,02 bis 3 mol pro kg wasseremulgierbarer Polyisocyanate beträgt und die schwefelsaure Gruppe als Salz mit tertiären Aminen vorliegt.

2. Wäßrige Dispersionen von Polyurethanen oder radikalisch polymerisierten Polymeren, enthaltend die wasseremulgierbaren Polyisocyanate gemäß Anspruch 1.

3. Klebstoffe, Beschichtungsmittel oder Imprägnierungsmittel auf Basis wäßriger Dispersionen, enthaltend die wasseremulgierbaren Polyisocyanate gemäß Anspruch 1.

## Claims

1. Water-emulsifiable polyisocyanates comprising
a) aliphatic, cycloaliphatic and aromatic polyisocyanates and
b) reaction products of the abovementioned polyisocyanates with 2-hydroxyethanesulfonic acid or 2-hydroxypropanesulfonic acid,
wherein the content of the sulfo group is 0.02 to 3 mol per kg of water-emulsifiable polyisocyanates and the sulfo group is present as a salt with tertiary amines.

2. Aqueous dispersions of polyurethanes or free-radically polymerized polymers, comprising the water-emulsifiable polyisocyanates according to claim 1.

3. Adhesives, coating compositions or impregnating compositions based on aqueous dispersions, comprising the water-emulsifiable polyisocyanates according to claim 1.

## Revendications

1. Polyisocyanates émulsionnables dans l'eau contenant
a) des polyisocyanates aliphatiques, cycloaliphatiques et aromatiques et
b) des produits de la réaction des polyisocyanates précédemment cités avec des acides 2-hydroxyéthanesulfonique ou 2-hydroxypropanesulfonique.
la teneur en groupements acide sulfurique s'élèvent à 0,02-3 moles par kg de polyisocyanates émulsionnables dans l'eau et les groupes d'acide sulfurique se trouvant sous forme de sels avec des amines tertiaires.

2. Dispersions aqueuses de polyuréthanes ou de polymères polymérisés par voie radicalaire, contenant les polyisocynates émulsionnables dans l'eau selon la revendication 1.

3. Adhésifs, agents de revêtement ou d'imprégnation à base de dispersions aqueuses contenant les polyisocynates émulsionnables dans l'eau selon la revendication 1.
